# EUROPEAN PATENT SPECIFICATION

(11) **EP 4 083 616 B1**
(45) Date of publication and mention of the grant of the patent: **01.11.2023**
(21) Application number: 22162775.5
(22) Date of filing: 17.03.2022
(51) Int. Cl.: G01N 27/406, G01N 27/407

(54) **GAS SENSOR AND METHOD FOR MANUFACTURING THE GAS SENSOR**
GASSENSOR UND VERFAHREN ZUR HERSTELLUNG DES GASSENSORS
CAPTEUR DE GAZ ET PROCÉDÉ DE FABRICATION DU CAPTEUR DE GAZ

(30) Priority: 28.04.2021 JP 2021075817; 24.12.2021 JP 2021210400
(43) Date of publication of application: 02.11.2022
(73) Proprietor: Niterra Co., Ltd., Nagoya-shi, Aichi 461-0005 (JP)
(72) Inventor: Liu, Sunchao, Nagoya-shi, Aichi, 467-8525 (JP); Oba, Takehiro, Nagoya-shi, Aichi, 467-8525 (JP); Masuda, Kenji, Nagoya-shi, Aichi, 467-8525 (JP)
(74) Representative: Diehl & Partner

(56) References cited:
- DE-A1-102017 003 445
- US-A1- 2013 312 485
- US-A1- 2021 072 177

## Description

### BACKGROUND

### TECHNICAL FIELD

The present invention relates to a gas sensor and a method for manufacturing the gas sensor.

### BACKGROUND ART

Conventionally, there has been known a gas sensor that is mounted on an exhaust pipe of an automobile or the like when being used and that detects a specific gas component (for example, oxygen, NOx, or the like) in a gas to be measured (exhaust gas). As such a gas sensor, Patent Literature 1 discloses a gas sensor including: a sensor element which extends in an axial direction and which has an electrode terminal portion on a rear side; a metal shell which surrounds the periphery of the sensor element; and an outer casing which is made of metal, which has a tubular shape extending in the axial direction, and which is mounted on a portion on the rear side of the metal shell.
Patent Literature 2 discloses a gas sensor including a separator assembly, wherein a central portion of a metallic external cylinder is swaged toward the inside in the radial direction, thereby fixing a retaining member to the metallic external cylinder. Patent Literature 3 discloses a gas senor including a gas sensor element extending in an axial direction; a shell; a separator; a metal tube; and a tubular holder inside the metal tube.
Patent Literature 4 discloses a gas sensor including a sensor element extending in an axial direction; a metal shell surrounding and supporting the sensor element; an exterior tube mounted to a rear end of the metal shell; a tubular separator disposed in the exterior tube; and a holder in contact with the separator in the axial direction.

### CITATION LIST

### PATENT LITERATURE

Patent Literature 1: Japanese patent application JP 2019-2936 A
Patent Literature 2: US 2013/0312485 A1
Patent Literature 3: DE 10 2017 003 445 A1
Patent Literature 3: US 2021/0072177 A1

The gas sensor further includes: a metal terminal which extends in the axial direction and which has a front side connection portion to which the electrode terminal portion of the sensor element is connected; a separator which has a tubular shape extending in the axial direction, which is placed inside the outer casing so as to be spaced apart from the inner peripheral surface of the outer casing, and in which the front side connection portion of the metal terminal and a portion, of the sensor element, having the electrode terminal portion are housed; a lead wire which is connected to a rear side connection portion, of the metal terminal, located on the rear side and which extends to the rear side; and a rubber cap which has a tubular shape extending in the axial direction and which is fixed to the outer casing so as to close a rear side opening of the outer casing. The separator includes: a separator body portion which has a tubular shape and which is obtained by combining two insulating members made of insulating ceramic; and a body-portion holding portion (a portion which surrounds the periphery of the separator body portion to maintain the tubular shape of the separator body portion) which holds a combined state of the two insulating members that constitute the separator body portion having a tubular shape. In the gas sensor, the rear side connection portion of the metal terminal is inserted in a through hole which penetrates the rubber cap in the axial direction, and a portion, of the lead wire, which is located on the rear side with respect to the rear side connection portion and which is inserted in the through hole of the rubber cap is fixed in close contact with the through hole.

### SUMMARY

### TECHNICAL PROBLEM

Meanwhile, in the above-described gas sensor, the separator is spaced apart from an inner casing which is a front side member. The front side member is a member that is located closest to the separator among members located on the front side with respect to the separator and in which the sensor element is inserted in the axial direction. Furthermore, the separator is also spaced apart from the rubber cap which is a rear side member. The rear side member is a member that is located closest to the separator among members located on the rear side with respect to the separator. Therefore, in the above-described gas sensor, the separator is not fixed inside the outer casing.

Therefore, when a force is applied from the outside to the above-described gas sensor or vibration is transmitted from the outside to the above-described gas sensor, the separator may vibrate relative to the outer casing in a direction (for example, the radial direction of the outer casing) crossing the axial direction. Accordingly, the front side connection portion of the metal terminal which is housed inside the separator may vibrate relative to the outer casing in the direction (referred to as axial line crossing direction) crossing the axial direction. On the other hand, the rubber cap which is fixed to the outer casing does not vibrate (or is less likely to vibrate) relative to the outer casing, so that the rear side connection portion of the metal terminal which is inserted in the rubber cap also does not vibrate (or is less likely to vibrate) relative to the outer casing.

Therefore, in the metal terminal extending in the axial direction, the front side connection portion of the metal terminal may vibrate relative to the rear side connection portion in the axial line crossing direction, whereby stress (for example, shear stress) may occur between the front side connection portion and the rear side connection portion, and the metal terminal may be broken between the front side connection portion and the rear side connection portion. Due to this, the gas sensor is required to reduce vibration of the separator relative to the outer casing in the axial line crossing direction (the direction crossing the axial direction).

The present invention has been made in view of such circumstances, and an object of the present invention is to provide a gas sensor in which a separator is less likely to vibrate relative to an outer casing in an axial line crossing direction, and a method for manufacturing the gas sensor.

### SOLUTION TO PROBLEM

An aspect of the present invention is directed to a gas sensor according to claim 1.

The above-described gas sensor includes the metal holder which holds the separator. The metal holder has a tubular shape extending in the axial direction, and is placed inside the outer casing so as to surround the periphery (outer periphery) of the separator to hold the separator. The metal holder includes the holding portion which is in contact with the separator to hold the separator, and the outer casing contact portion which is in contact with the inner peripheral surface of the outer casing. The metal holder is fixed to the outer casing by welding the outer casing contact portion thereof to the outer casing. Therefore, in the above-described gas sensor, the separator is fixed to the outer casing via the metal holder.

Therefore, in the above-described gas sensor, when a force is applied from the outside to the gas sensor or vibration is transmitted from the outside to the gas sensor, "vibration of the separator relative to the outer casing in a direction (for example, the radial direction of the outer casing) crossing the axial direction" is less likely to occur. Therefore, the above-described gas sensor is a gas sensor in which the separator is less likely to vibrate relative to the outer casing in an axial line crossing direction.

Meanwhile, in a method for manufacturing a gas sensor, it is conceivable that a metal holder is welded to an outer casing by welding a front end portion of the metal holder and a front end portion of the outer casing together to a metal shell, that is, by welding three members that are the metal holder, the outer casing, and the metal shell. On the other hand, in the above-described gas sensor, the outer casing contact portion of the metal holder is welded to only the outer casing. That is, only two members that are the metal holder (the outer casing contact portion) and the outer casing are welded to each other. In other words, the metal holder is joined (fixed) to the outer casing by the welded portion formed by the outer casing contact portion of the metal holder and the outer casing. Therefore, the metal holder can be easily welded to the outer casing as compared to the former case where three members are welded to one another.

Furthermore, in the above-described gas sensor, since the welded portion is formed by only two members that are the metal holder and the outer casing, occurrence of cracking in the welded portion due to the difference in thermal expansion between the members forming the welded portion can be reduced as compared to the case where a welded portion is formed by three members that are a metal holder, an outer casing, and a metal shell. This is because, as the number of types of members forming the welded portion is smaller, the possibility that cracking occurs in the welded portion due to the difference in thermal expansion between the members forming the welded portion is lower.

An example of the separator is a tubular separator made of insulating ceramic. In addition, another example of the separator is a separator which includes: a tubular separator body portion obtained by combining a plurality of insulating members made of insulating ceramic; and a body-portion holding portion (for example, a body-portion holding portion which surrounds the periphery of the separator body portion to maintain the tubular shape of the separator body portion) holding a combined state of the plurality of insulating members that constitute the tubular separator body portion.

Furthermore, in the above gas sensor, a welded portion of the outer casing contact portion of the metal holder and the outer casing may be formed on the inner peripheral surface side with respect to an outer peripheral surface of the outer casing.

In the above-described gas sensor, the welded portion (the portion solidified after melting) of the outer casing contact portion of the metal holder and the outer casing is formed on the inner peripheral surface side with respect to the outer peripheral surface of the outer casing. That is, the welded portion of the outer casing contact portion of the metal holder and the outer casing is formed without being exposed on the outer peripheral surface of the outer casing. The welded portion is more likely to corrode as compared to a portion that is not welded (the portion where the base material remains as it is). Thus, in the case where the welded portion is exposed on the outer peripheral surface of the outer casing, the corrosion resistance of the outer casing including the welded portion decreases. On the other hand, in the above-described gas sensor, since the welded portion of the outer casing contact portion of the metal holder and the outer casing is not exposed on the outer peripheral surface of the outer casing, a decrease in the corrosion resistance of the outer casing can be suppressed.

Furthermore, in any gas sensor described above, an average thickness of an annular portion, of the outer casing, having the welded portion with the outer casing contact portion in a circumferential direction may be within a range of not less than 0.3 mm and not greater than 1.0 mm.

In the above-described gas sensor, the average thickness of the annular portion, of the outer casing, having, in the circumferential direction, the welded portion welded to the outer casing contact portion of the metal holder is set to a value within the range of not less than 0.3 mm and not greater than 1.0 mm. By setting so, in the gas sensor, the outer casing is appropriately welded to the outer casing contact portion of the metal holder while required strength of the outer casing is ensured.

Furthermore, in any gas sensor described above, an average thickness of the outer casing contact portion of the metal holder may be within a range of not less than 0.2 mm and not greater than 1.0 mm.

In the above-described gas sensor, the average thickness of the outer casing contact portion welded to the outer casing, of the metal holder, is set to a value within the range of not less than 0.2 mm and not greater than 1.0 mm. By setting so, in the gas sensor, the outer casing contact portion of the metal holder is appropriately welded to the outer casing while required strength of the metal holder is ensured.

Another aspect of the present invention is directed to a method for manufacturing any gas sensor described above, the method being defined in claim 5.

In the above-described manufacturing method, after the placing step is performed, the outer casing and the outer casing contact portion of the metal holder are welded to each other in the welding step. Accordingly, the separator can be fixed to the outer casing via the metal holder. Therefore, with the above-described manufacturing method, it is possible to appropriately manufacture a gas sensor in which the separator is fixed to the outer casing via the metal holder.

In the gas sensor manufactured as described above, when a force is applied from the outside to the gas sensor or vibration is transmitted from the outside to the gas sensor, "vibration of the separator relative to the outer casing in a direction (for example, the radial direction of the outer casing) crossing the axial direction" is less likely to occur. Therefore, with the above-described manufacturing method, it is possible to manufacture a gas sensor in which the separator is less likely to vibrate relative to the outer casing in the axial line crossing direction.

Moreover, in the above-described manufacturing method, in the welding step, only the outer casing and the outer casing contact portion of the metal holder (that is, only two members) are welded to each other. Therefore, the metal holder can be easily welded to the outer casing as compared to the case where three members that are a metal holder, an outer casing, and a metal shell are welded as described above. Furthermore, the welded portion is formed by only two members that are the metal holder and the outer casing, so that occurrence of cracking in the welded portion due to the difference in thermal expansion between the members forming the welded portion can be reduced as compared to the case where a welded portion is formed by three members that are a metal holder, an outer casing, and a metal shell.

Furthermore, in the method for manufacturing the gas sensor, the welding step may be a resistance welding step of performing resistance welding of only the outer casing and the outer casing contact portion.

In the above-described manufacturing method, since the outer casing and the outer casing contact portion of the metal holder are joined to each other by means of resistance welding, the welded portion (portion solidified after melting) of the outer casing contact portion of the metal holder and the outer casing is formed without being exposed on the outer peripheral surface of the outer casing. By forming the welded portion, which is more likely to corrode as compared to the portion that is not welded (portion where the base material remains as it is), so as not to be exposed on the outer peripheral surface of the outer casing as described above, a decrease in the corrosion resistance of the outer casing can be suppressed.

### BRIEF DESCRIPTION OF THE DRAWINGS

FIG. 1 is a vertical cross-sectional view of a gas sensor according to an embodiment;
FIG. 2 is an enlarged view of a portion B in FIG. 1;
FIG. 3 is a perspective view of a sensor element;
FIG. 4 is a partially-enlarged vertical cross-sectional view of the gas sensor;
FIG. 5 is a plan view (top view) of a metal holder;
FIG. 6 is a side view of the metal holder;
FIG. 7 is a cross-sectional view taken along a line D-D in FIG. 5;
FIG. 8 is an enlarged view of a portion C in FIG. 2;
FIG. 9 is a diagram illustrating a method for manufacturing the gas sensor according to the embodiment; and
FIG. 10 is an enlarged view of a portion E in FIG. 9.

### DETAILED DESCRIPTION OF THE EXEMPLARY EMBODIMENTS

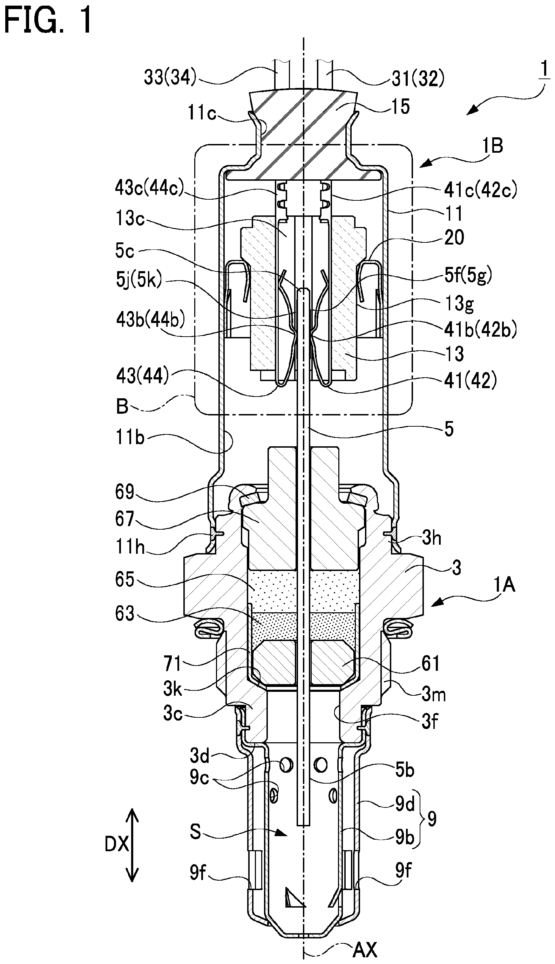

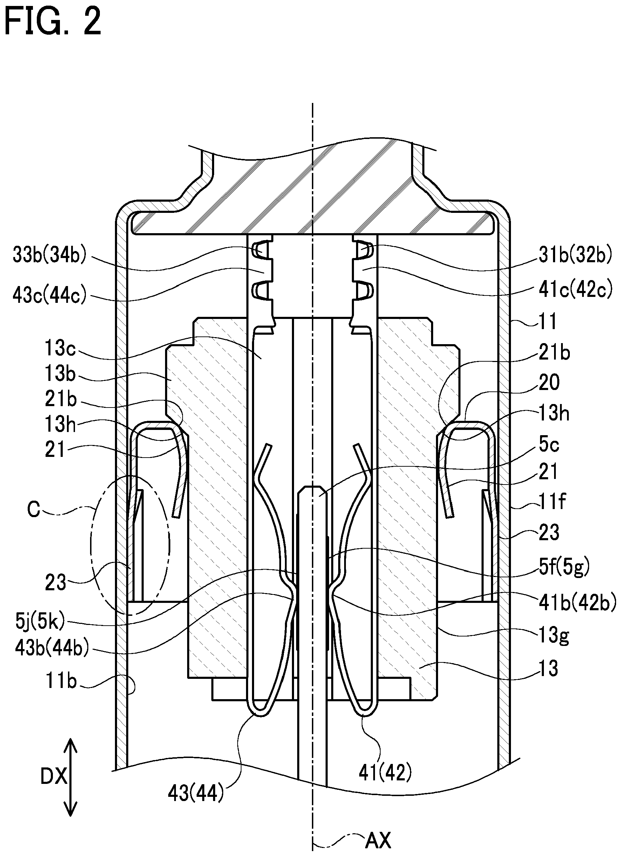

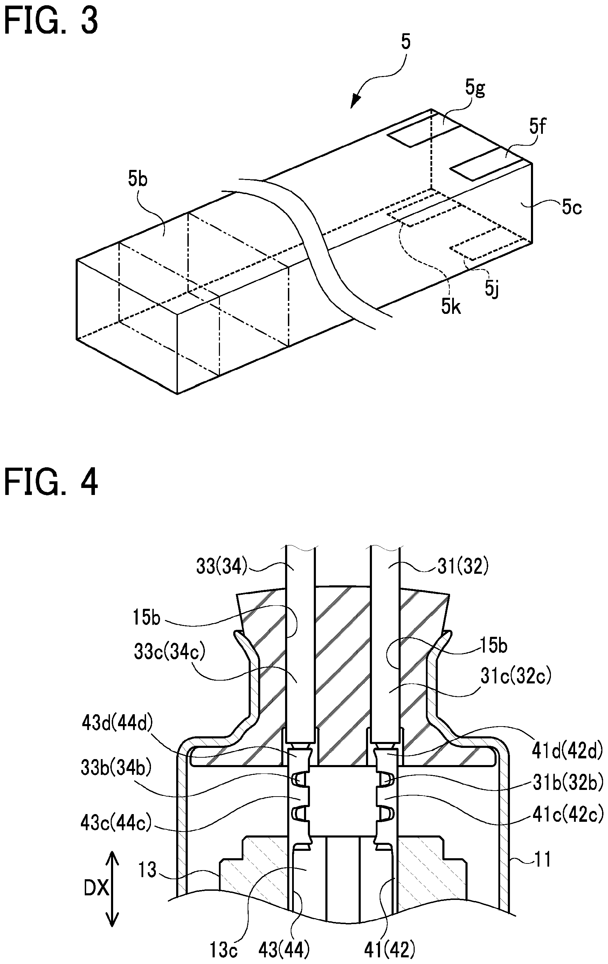

Hereinafter, an embodiment of the present invention will be described with reference to the drawings. FIG. 1 is a vertical cross-sectional view of a gas sensor 1 according to the embodiment, and is a cross-sectional view obtained by cutting the gas sensor 1 in an axial direction DX at a position passing through an axial line AX of the gas sensor 1 (but a sensor element 5 is not cut). In FIG. 1, the lower side is the front side of the gas sensor 1, and the upper side is the rear side of the gas sensor 1. In addition, FIG. 2 is an enlarged view of a portion B in FIG. 1. Moreover, FIG. 4 is a partially-enlarged vertical cross-sectional view of the gas sensor 1, and is a partially-enlarged cross-sectional view obtained by cutting the gas sensor 1 in the axial direction DX at a position different from that in FIG. 1 (position that passes through two of four through holes 15b of a rubber cap 15 and that is a position on the far side of the drawing sheet with respect to FIG. 1) (but metal terminals 41 to 44 and lead wires 31 to 34 are not cut).

The gas sensor 1 is mounted on an exhaust pipe of an automobile or the like, which is not shown, such that a portion on the front side thereof is inserted in the exhaust pipe, and is used in a state where the front side thereof is directed downward. Specifically, the gas sensor 1 detects a specific gas component (for example, oxygen, NOx, or the like) in exhaust gas (gas to be measured). As shown in FIG. 1, the gas sensor 1 includes the sensor element 5, a metal shell 3, a protector 9, and an outer casing 11.

The sensor element 5 has a rod shape extending in the axial direction DX (a direction along the axial line AX of the gas sensor 1, the up-down direction in FIG. 1), and includes a detection portion 5b covered with a protective layer (not shown), on the front side where the sensor element 5 is exposed to a gas to be measured (exhaust gas). The detection portion 5b detects a specific gas component (for example, oxygen, NOx, or the like) in the exhaust gas (the gas to be measured). The sensor element 5 further includes four electrode terminal portions (a first electrode terminal portion 5f, a second electrode terminal portion 5g, a third electrode terminal portion 5j, and a fourth electrode terminal portion 5k) on the rear side of the sensor element 5 (see FIG. 3). The sensor element 5 is inserted in a through hole 3f of the metal shell 3. Specifically, the sensor element 5 is fixed in the through hole 3f of the metal shell 3 in a state where the detection portion 5b located on the front side projects from a front end surface 3d of the metal shell 3 to the front side of the gas sensor 1 and the four electrode terminal portions (the first electrode terminal portion 5f to the fourth electrode terminal portion 5k) located on the rear side of the sensor element 5 project from the rear end of the metal shell 3 to the rear side of the gas sensor 1.

The metal shell 3 holds the sensor element 5 (through another member) while surrounding the periphery of the sensor element 5. The metal shell 3 has a tubular shape extending in the axial direction DX, includes the through hole 3f extending from the front side to the rear side of the metal shell 3, and also includes an outer surface provided with a screw portion 3m for fixing the metal shell 3 to an exhaust pipe (see FIG. 1). In the through hole 3f, a shelf portion 3k is formed so as to project radially inward. Furthermore, the metal shell 3 has a cylindrical front side wall portion 3c including the front end surface 3d. The metal shell 3 is formed from a metal material (for example, stainless steel or the like).

Inside the through hole 3f of the metal shell 3, an annular holder 61 made of an insulating material (for example, alumina), talc powder filled layers 63 and 65, and an annular sleeve 67 made of an insulating material (for example, alumina) are placed so as to surround the periphery in the radial direction of the sensor element 5 (see FIG. 1). A swaging packing 69 is placed between the sleeve 67 and a rear end portion of the metal shell 3. In addition, a tubular metal holder 71 is placed between the holder 61 and the shelf portion 3k of the metal shell 3 to hold the talc powder filled layer 63 and the holder 61. The rear end portion of the metal shell 3 is swaged so as to press the sleeve 67 to the front side via the swaging packing 69 (see FIG. 1).

The protector 9 has a tubular shape and is fixed to a portion on the front side of the metal shell 3. Specifically, the protector 9 is fixed to the outer peripheral surface of the front side wall portion 3c of the metal shell 3 by means of welding or the like (not shown) so as to surround a portion on the front side of the sensor element 5 (a portion projecting from the front end surface 3d of the metal shell 3 to the front side). The protector 9 is made of a heat resistant material (for example, NCF601). The protector 9 has a double tubular structure including: a tubular first protector 9b (an inner protector) forming a measurement chamber S in which the detection portion 5b of the sensor element 5 is placed; and a tubular second protector 9d (an outer protector) surrounding the outer periphery of the first protector 9b. The first protector 9b has a plurality of ventilation holes 9c formed so as to allow the gas to be measured to pass therethrough. The second protector 9d has a plurality of ventilation holes 9f formed so as to allow the gas to be measured to pass therethrough (see FIG. 1).

The outer casing 11 is made of metal and has a cylindrical shape extending in the axial direction DX. The outer casing 11 is mounted (welded) on a portion on the rear side of the metal shell 3 and surrounds a portion on the rear side of the sensor element 5 (see FIG. 1).

The gas sensor 1 further includes four metal terminals (a first metal terminal 41, a second metal terminal 42, a third metal terminal 43, a fourth metal terminal 44), a separator 13, four lead wires (a first lead wire 31, a second lead wire 32, a third lead wire 33, a fourth lead wire 34), and the rubber cap 15 (see FIG. 1 and FIG. 2). The four metal terminals (the first metal terminal 41 to the fourth metal terminal 44) are each made of an elastic heat resistant metal (for example, stainless steel) and have a shape extending in the axial direction DX.

The first metal terminal 41 has a first front side connection portion 41b to which the first electrode terminal portion 5f of the sensor element 5 is connected, and a first rear side connection portion 41c to which the first lead wire 31 (specifically, a metal core wire 31b in the first lead wire 31) is connected (see FIG. 1 and FIG. 2). The second metal terminal 42 has a second front side connection portion 42b to which the second electrode terminal portion 5g of the sensor element 5 is connected, and a second rear side connection portion 42c to which the second lead wire 32 (specifically, a metal core wire 32b in the second lead wire 32) is connected. The third metal terminal 43 has a third front side connection portion 43b to which the third electrode terminal portion 5j of the sensor element 5 is connected, and a third rear side connection portion 43c to which the third lead wire 33 (specifically, a metal core wire 33b in the third lead wire 33) is connected. The fourth metal terminal 44 has a fourth front side connection portion 44b to which the fourth electrode terminal portion 5k of the sensor element 5 is connected, and a fourth rear side connection portion 44c to which the fourth lead wire 34 (specifically, a metal core wire 34b in the fourth lead wire 34) is connected (see FIG. 1 and FIG. 2).

The separator 13 is made of ceramic (for example, alumina, steatite, or the like) and has a cylindrical shape extending in the axial direction DX. The separator 13 is placed inside the outer casing 11 so as to be spaced apart from an inner peripheral surface 11b of the outer casing 11 (that is, so as not to be in direct contact with the inner peripheral surface 11b of the outer casing 11) (see FIG. 1 and FIG. 2). In the gas sensor 1 according to the present embodiment, as described later, the metal holder 20 is interposed between an outer peripheral surface 13g of the separator 13 and the inner peripheral surface 11b of the outer casing 11, and a mode in which the outer peripheral surface 13g of the separator 13 and the inner peripheral surface 11b of the outer casing 11 are connected via the metal holder 20 is also included in the "mode in which the separator 13 is spaced apart from the inner peripheral surface 11b of the outer casing 11".

Furthermore, the separator 13 has a through hole 13c penetrating the separator 13 in the axial direction DX. In the through hole 13c, the four front side connection portions (the first front side connection portion 41b to the fourth front side connection portion 44b) of the four metal terminals (the first metal terminal 41 to the fourth metal terminal 44) and a rear end portion 5c, of the sensor element 5, having the four electrode terminal portions (the first electrode terminal portion 5f to the fourth electrode terminal portion 5k) are housed (see FIG. 1 and FIG. 2). Moreover, the separator 13 has, on the rear side thereof, an annular flange portion 13b which projects radially outward.

The rubber cap 15 is made of a heat resistant rubber and has a tubular shape (columnar shape) extending in the axial direction DX. The rubber cap 15 is fixed to the outer casing 11 so as to close a rear side opening 11c of the outer casing 11 (see FIG. 1). Specifically, the rubber cap 15 is fixed to the outer casing 11 by swaging a rear end portion of the outer casing 11 radially inward. The rubber cap 15 has four through holes 15b penetrating the rubber cap 15 in the axial direction DX (see FIG. 4).

In the gas sensor 1 according to the present embodiment, at least rear end portions (the first rear end portion 41d, the second rear end portion 42d, the third rear end portion 43d, and the fourth rear end portion 44d) of the four rear side connection portions (the first rear side connection portion 41c to the fourth rear side connection portion 44c) of the four metal terminals (the first metal terminal 41 to the fourth metal terminal 44) are individually inserted in the through holes 15b of the rubber cap 15. In the present embodiment, only the rear end portions (the first rear end portion 41d, the second rear end portion 42d, the third rear end portion 43d, and the fourth rear end portion 44d) of the four rear side connection portions (the first rear side connection portion 41c to the fourth rear side connection portion 44c) are inserted in the through holes 15b of the rubber cap 15, respectively (see FIG. 4).

Furthermore, of the four lead wires (the first lead wire 31 to the fourth lead wire 34), portions (the first portion 31c, the second portion 32c, the third portion 33c, and the fourth portion 34c) that are located on the rear side with respect to the four rear side connection portions (the first rear side connection portion 41c to the fourth rear side connection portion 44c) and that are inserted in the through holes 15b of the rubber cap 15 are fixed in close contact with the through holes 15b of the rubber cap 15 (tubular surfaces forming the through holes 15b). The four lead wires (the first lead wire 31 to the fourth lead wire 34) extend from the rear side of the through holes 15b of the rubber cap 15 to the outside of the rubber cap 15 (see FIG. 4).

Furthermore, the gas sensor 1 according to the present embodiment includes the metal holder 20 which holds the separator 13 (see FIG. 1 and FIG. 2). The metal holder 20 has a cylindrical shape extending in the axial direction DX, and is placed inside the outer casing 11 so as to surround the periphery (outer periphery) of the separator 13 to hold (support) the separator 13. The metal holder 20 has a holding portion 21 which is in contact with the separator 13 to hold the separator 13, and an outer casing contact portion 23 which is in contact with the inner peripheral surface 11b of the outer casing 11. The metal holder 20 is fixed to the outer casing 11 by welding the outer casing contact portion 23 to the outer casing 11.

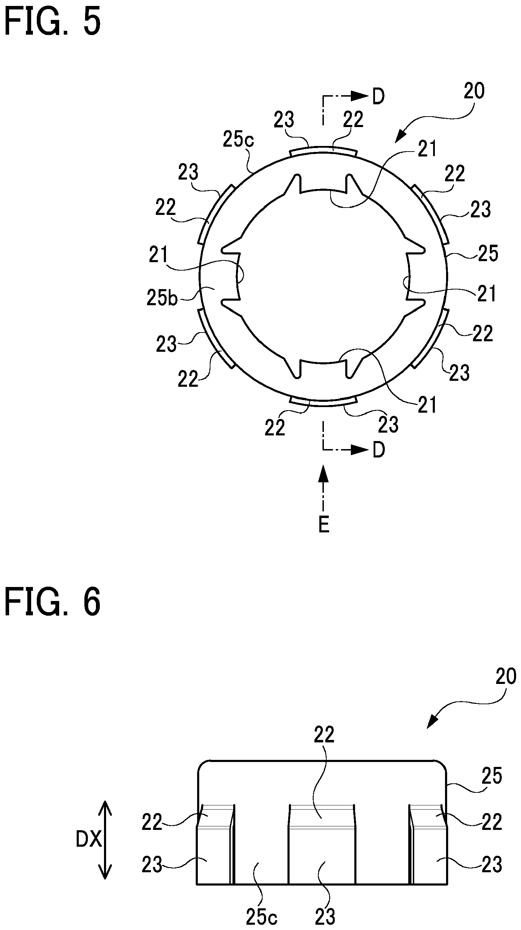

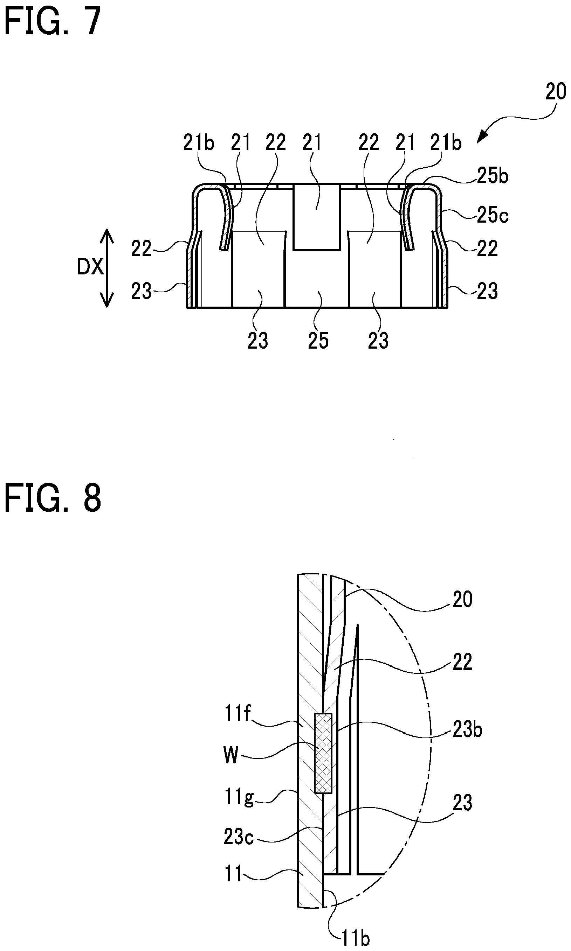

Specifically, as shown in FIG. 5 to FIG. 7, the metal holder 20 includes a cylindrical body portion 25, a plurality of curved rectangular plate-shaped holding portions 21 which are bent from the inner side of a rear end portion 25b of the body portion 25 and which extend to the front side, a plurality of curved rectangular plate-shaped outer casing contact portions 23 which are located radially outward of a tubular side wall portion 25c of the body portion 25, and connecting portions 22 connecting the side wall portion 25c and the outer casing contact portions 23. Each outer casing contact portion 23 and each connecting portion 22 are formed, for example, by: making, in the side wall portion 25c of the body portion 25, two cuts extending from a front-side end of the side wall portion 25c toward the rear side along the axial direction DX (up-down direction in FIG. 5 and FIG. 7) so as to be spaced apart from each other in the circumferential direction of the side wall portion 25c; and deforming a portion located between the cuts (i.e., a portion which is to be the outer casing contact portion 23 and the connecting portion 22) to the outer side in the radial direction of the side wall portion 25c.

Four holding portions 21 are provided at equal intervals in the circumferential direction of the body portion 25. A rear end portion 21b of each holding portion 21 is in contact with a front side surface 13h (which is a part of the outer peripheral surface 13g of the separator 13) of the flange portion 13b (see FIG. 2). Therefore, the four holding portions 21 hold the separator 13 so as to support the flange portion 13b of the separator 13 from the front side (lower side). Furthermore, each holding portion 21 is formed as a leaf spring and elastically deforms in the radial direction of the body portion 25. The four holding portions 21 are placed at equal intervals in the circumferential direction of the outer peripheral surface 13g of the separator 13, and are in contact with the outer peripheral surface 13g of the separator 13 so as to be elastically deformed radially outward. Accordingly, the outer peripheral surface 13g of the separator 13 is pressed by the radially inward elastic restoring forces of the four holding portions 21 which are placed at equal intervals in the circumferential direction of the outer peripheral surface 13g. Therefore, the separator 13 is also held by the radially inward elastic restoring forces of the four holding portions 21 which are placed at equal intervals in the circumferential direction of the outer peripheral surface 13g (see FIG. 2).

The metal holder 20 is fixed to the outer casing 11 by welding the outer casing contact portions 23 to the outer casing 11. Therefore, in the gas sensor 1 according to the present embodiment, the separator 13 is held by the metal holder 20 fixed to the outer casing 11. In other words, the separator 13 is fixed to the outer casing 11 via the metal holder 20. The outer casing 11 is fixed to the portion on the rear side of the metal shell 3 (namely, an outer casing fixing portion 3h) by means of welding. In addition, the metal shell 3 is fixed to an exhaust pipe, which is not shown, by the screw portion 3m. Therefore, the outer casing 11 is fixed to the exhaust pipe through the metal shell 3.

In the gas sensor 1 configured as above, when a force is applied from the outside to the gas sensor 1 or vibration is transmitted from the outside to the gas sensor 1, "vibration of the separator 13 relative to the outer casing 11 in a direction (for example, the radial direction of the outer casing 11) crossing the axial direction DX" is less likely to occur. Therefore, it can be said that the gas sensor 1 according to the present embodiment is a gas sensor 1 in which the separator 13 is less likely to vibrate relative to the outer casing 11 in an axial line crossing direction.

Furthermore, in the four metal terminals (the first metal terminal 41 to the fourth metal terminal 44), the four front side connection portions (the first front side connection portion 41b to the fourth front side connection portion 44b) which are housed inside the separator 13 are also less likely to vibrate relative to the outer casing 11 in a direction crossing the axial direction DX (referred to as axial line crossing direction) (see FIG. 2). In the gas sensor 1, since the rubber cap 15 is fixed to the outer casing 11, the four rear side connection portions (the first rear side connection portion 41c to the fourth rear side connection portion 44c) whose rear end portions (the first rear end portion 41d, the second rear end portion 42d, the third rear end portion 43d, and the fourth rear end portion 44d) are inserted in the through holes 15b of the rubber cap 15 are less likely to vibrate relative to the outer casing 11 in the axial line crossing direction (see FIG. 4).

Therefore, in the gas sensor 1 according to the present embodiment, in the four metal terminals (the first metal terminal 41 to the fourth metal terminal 44) extending in the axial direction DX, "vibration of the front side connection portions (the first front side connection portion 41b to the fourth front side connection portion 44b) relative to the rear side connection portions (the first rear side connection portion 41c to the fourth rear side connection portion 44c) in the axial line crossing direction" is less likely to occur, so that stress (for example, shear stress) is less likely to occur in the metal terminals (the first metal terminal 41 to the fourth metal terminal 44), and breakage of the metal terminals (the first metal terminal 41 to the fourth metal terminal 44) is also less likely to occur.

Meanwhile, as a gas sensor, a gas sensor in which a front end portion of a metal holder and a front end portion of an outer casing are welded together to a metal shell, that is, three members that are the metal holder, the outer casing, and the metal shell are welded, thereby welding the metal holder to the outer casing, is conceivable. In contrast, in the gas sensor 1 according to the present embodiment, each outer casing contact portion 23 of the metal holder 20 is welded to only the outer casing 11. That is, only two members that are the metal holder 20 (outer casing contact portions 23) and the outer casing 11 are welded to each other. In other words, the metal holder 20 is joined (fixed) to the outer casing 11 by a welded portion W formed by only each outer casing contact portion 23 of the metal holder 20 and the outer casing 11 (see FIG. 8). Therefore, in manufacturing a gas sensor, the metal holder 20 can be easily welded to the outer casing 11 in the present embodiment as compared to the case where three members are welded as in the former case.

Furthermore, in the gas sensor 1 according to the present embodiment, since the welded portion W is formed by only two members that are the metal holder 20 and the outer casing 11 (see FIG. 8), occurrence of cracking in the welded portion W due to the difference in thermal expansion between the members forming the welded portion W can be reduced as compared to the case where a welded portion is formed by three members that are a metal holder, an outer casing, and a metal shell. This is because, as the number of types of members forming the welded portion W is smaller, the possibility that cracking occurs in the welded portion W due to the difference in thermal expansion between the members forming the welded portion W is lower.

Furthermore, in the gas sensor 1 according to the present embodiment, the welded portion W (the portion solidified after melting) of each outer casing contact portion 23 of the metal holder 20 and the outer casing 11 is formed on the inner peripheral surface 11b side with respect to an outer peripheral surface 11g of the outer casing 11 (see FIG. 8). That is, the welded portion W of each outer casing contact portion 23 of the metal holder 20 and the outer casing 11 is formed without being exposed on the outer peripheral surface 11g of the outer casing 11. The welded portion W is more likely to corrode as compared to a portion that is not welded (a portion where the base material remains as it is). Thus, in the case where the welded portion W is exposed on the outer peripheral surface 11g of the outer casing 11, the corrosion resistance of the outer casing 11 including the welded portion W decreases. On the other hand, in the gas sensor 1 according to the present embodiment, since the welded portion W of each outer casing contact portion 23 of the metal holder 20 and the outer casing 11 is not exposed on the outer peripheral surface 11g of the outer casing 11, a decrease in the corrosion resistance of the outer casing 11 can be suppressed.

In the present embodiment, each outer casing contact portion 23 of the metal holder 20 and the outer casing 11 are welded to each other by means of resistance welding. Therefore, the welded portion W of each outer casing contact portion 23 of the metal holder 20 and the outer casing 11 is formed on the inner peripheral surface 11b side with respect to the outer peripheral surface 11g of the outer casing 11 and on an outer surface 23c side with respect to an inner surface 23b of the outer casing contact portion 23 of the metal holder 20 (see FIG. 8). That is, the welded portion W is formed without being exposed on the outer peripheral surface 11g of the outer casing 11 and without being exposed on the inner surface 23b of the outer casing contact portion 23 of the metal holder 20 (see FIG. 8).

Furthermore, in the gas sensor 1 according to the present embodiment, the average thickness of a circular-ring shaped annular portion 11f, of the outer casing 11, having, in the circumferential direction of the outer casing 11, the welded portions W welded to the outer casing contact portions 23 of the metal holder 20 is set to a value within the range of not less than 0.3 mm and not greater than 1.0 mm. By setting so, in the gas sensor 1, the outer casing 11 is appropriately welded to each outer casing contact portion 23 of the metal holder 20 while required strength of the outer casing 11 is ensured. In the present embodiment, the average thickness of the annular portion 11f is the average value of thicknesses at six locations at which the annular portion 11f is in contact with the six outer casing contact portion s 23 of the metal holder 20.

Furthermore, in the gas sensor 1 according to the present embodiment, the average thickness of the outer casing contact portions 23 welded to the outer casing 11, of the metal holder 20, is set to a value within the range of not less than 0.2 mm and not greater than 1.0 mm. By setting so, in the gas sensor 1, each outer casing contact portion 23 of the metal holder 20 is appropriately welded to the outer casing 11 while required strength of the metal holder 20 is ensured. In the present embodiment, the average thickness of the outer casing contact portions 23 is the average value of the thicknesses of the six outer casing contact portions 23 provided in the metal holder 20.

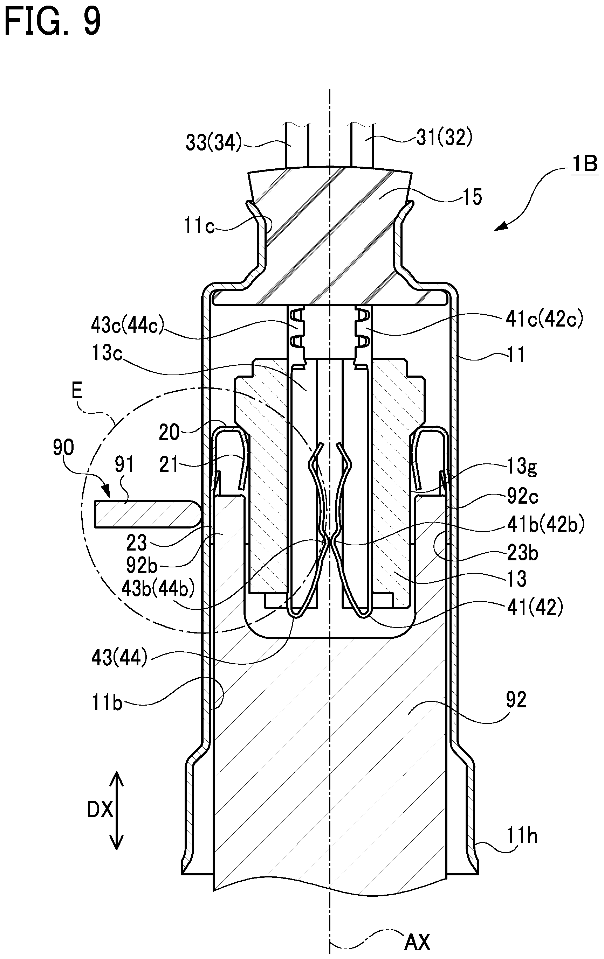

Next, a method for manufacturing the gas sensor 1 according to the present embodiment will be described. First, a rear side assembly 1B is produced by using the outer casing 11, the separator 13, the four metal terminals (the first metal terminal 41 to the fourth metal terminal 44), the four lead wires (the first lead wire 31 to the fourth lead wire 34), the rubber cap 15, and the metal holder 20 (see FIG. 9). Specifically, first, the four lead wires (the first lead wire 31 to the fourth lead wire 34) are inserted into the outer casing 11 from the front side thereof, and also inserted into the four through holes 15b of the rubber cap 15 and the through hole 13c of the separator 13. Then, the four lead wires (the first lead wire 31 to the fourth lead wire 34) are connected to the rear side connection portions (the first rear side connection portion 41c to the fourth rear side connection portion 44c) of the four metal terminals (the first metal terminal 41 to the fourth metal terminal 44) (FIG. 4).

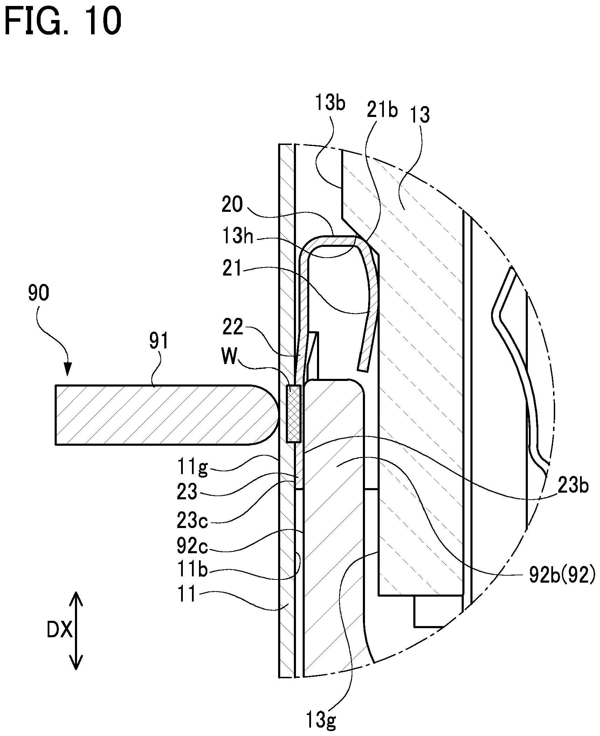

Next, the positions of the four lead wires (the first lead wire 31 to the fourth lead wire 34) are adjusted such that the rear end portions (the first rear end portion 41d to the fourth rear end portion 44d) of the four rear side connection portions (the first rear side connection portion 41c to the fourth rear side connection portion 44c) are housed in the through holes 15b of the rubber cap 15 and the front side connection portions (the first front side connection portion 41b to the fourth front side connection portion 44b) of the four metal terminals (the first metal terminal 41 to the fourth metal terminal 44) are housed in the through hole 13c of the separator 13. Then, the metal holder 20 is mounted on the periphery (the outer periphery) of the separator 13 such that the holding portions 21 of the metal holder 20 are in contact with the outer peripheral surface 13g of the separator 13. Specifically, the rear end portions 21b of the holding portions 21 of the metal holder 20 are brought into contact with the front side surface 13h (which is a part of the outer peripheral surface 13g of the separator 13) of the flange portion 13b of the separator 13 (see FIG. 10).

Next, the method proceeds to a placing step, and the metal holder 20 is placed inside the outer casing 11 so as to surround the periphery of the separator 13 such that the holding portions 21 of the metal holder 20 are in contact with the outer peripheral surface 13g of the separator 13 and the outer casing contact portions 23 of the metal holder 20 are in contact with the inner peripheral surface 11b of the outer casing 11 (see FIG. 9). Specifically, first, the rubber cap 15 through which the four lead wires (the first lead wire 31 to the fourth lead wire 34) have been inserted is inserted into the outer casing 11 from the front side (the lower side in FIG. 9) of the outer casing 11, and the metal holder 20 mounted on the periphery of the separator 13 is further inserted into the outer casing 11 together with the separator 13 in which the front side connection portions (the first front side connection portion 41b to the fourth front side connection portion 44b) have been housed, thereby obtaining a state where the rubber cap 15 is placed inside the rear side opening 11c of the outer casing 11. In this state, the rear end portion of the outer casing 11 is swaged radially inward to fix the rubber cap 15 to the outer casing 11. Accordingly, the metal holder 20 is placed inside the outer casing 11 so as to surround the periphery of the separator 13 such that the holding portions 21 of the metal holder 20 are in contact with the outer peripheral surface 13g of the separator 13 and the outer casing contact portions 23 of the metal holder 20 are in contact with the inner peripheral surface 11b of the outer casing 11 (see FIG. 9).

In the present embodiment, the above-described placing step is performed by using a second electrode 92 of a resistance welding machine 90 used in a resistance welding step described later. Specifically, as shown in FIG. 9, an annular front end portion 92b of the second electrode 92 is inserted between the outer peripheral surface 13g of a portion on the front side (lower side in FIG. 9) of the separator 13 and the inner surface 23b of each outer casing contact portion 23 of the metal holder 20, and the metal holder 20 is mounted on the front end portion 92b of the second electrode 92 together with the separator 13. In this state, the front end portion 92b of the second electrode 92 is inserted into the outer casing 11 from the front side of the outer casing 11, whereby the metal holder 20 is placed inside the outer casing 11 so as to surround the periphery of the separator 13 such that the holding portions 21 of the metal holder 20 are in contact with the outer peripheral surface 13g of the separator 13 and the outer casing contact portions 23 of the metal holder 20 are in contact with the inner peripheral surface 11b of the outer casing 11 (see FIG. 9).

Each connecting portion 22 of the metal holder 20 is formed as a leaf spring and elastically deforms in the radial direction of the body portion 25. In addition, the maximum outer diameter (the outer diameter of the metal holder 20 at the positions of the outer surfaces 23c of two outer casing contact portions 23 opposing each other in the radial direction) of the metal holder 20 is slightly larger than the inner diameter (the diameter of the inner peripheral surface 11b) of the outer casing 11 in a natural state (a state where each connecting portion 22 does not elastically deform). Moreover, the outer surface 23c of each outer casing contact portion 23 and the inner peripheral surface 11b of the outer casing 11 have the same curvature. The metal holder 20 is formed such that, when the metal holder 20 is inserted into the outer casing 11, each connecting portion 22 of the metal holder 20 slightly elastically deforms radially inward and the outer surface 23c of each outer casing contact portion 23 of the metal holder 20 is in contact with the inner peripheral surface 11b of the outer casing 11 without any gap therebetween.

Therefore, when the metal holder 20 is inserted and placed in the outer casing 11 in the placing step as described above, the outer surface 23c of each outer casing contact portion 23 of the metal holder 20 is brought into contact (close contact) with the inner peripheral surface 11b of the outer casing 11 without any gap therebetween (see FIG. 10). Furthermore, the inner surface 23b of each outer casing contact portion 23 of the metal holder 20 is brought into contact with an outer peripheral surface 92c of the front end portion 92b of the second electrode 92. In this state, the resistance welding step is performed.

Specifically, resistance welding of the outer casing 11 and each outer casing contact portion 23 of the metal holder 20 is performed by using the resistance welding machine 90 having a first electrode 91 and the second electrode 92 (see FIG. 9). More specifically, the first electrode 91 is brought into contact with a portion, of the outer peripheral surface 11g of the outer casing 11, at which each outer casing contact portion 23 of the metal holder 20 is placed on the inner side in the radial direction, and the outer casing 11 and each outer casing contact portion 23 are sandwiched by the first electrode 91 and the second electrode 92. In this state, resistance welding of the outer casing 11 and each outer casing contact portion 23 of the metal holder 20 is performed by applying a current between the first electrode 91 and the second electrode 92 (see FIG. 9). Accordingly, the metal holder 20 is fixed to the outer casing 11, and the separator 13 is held by the metal holder 20 fixed to the outer casing 11. As a result, the rear side assembly 1B composed of the outer casing 11, the separator 13, the four metal terminals (the first metal terminal 41 to the fourth metal terminal 44), the four lead wires (the first lead wire 31 to the fourth lead wire 34), the rubber cap 15, and the metal holder 20 is formed (see FIG. 9).

In a separate process from the above process, a front side assembly 1A is produced by using the metal shell 3, the holder 61, the talc powder filled layers 63 and 65, the sleeve 67, the sensor element 5, the swaging packing 69, the metal holder 71, and the protector 9 (see FIG. 1). Then, the rear end portion 5c of the sensor element 5 of the front side assembly 1A is inserted into the separator 13 of the rear side assembly 1B, bringing the four electrode terminal portions (the first electrode terminal portion 5f to the fourth electrode terminal portion 5k) of the sensor element 5 into contact with the four front side connection portions (the first front side connection portion 41b to the fourth front side connection portion 44b) of the four metal terminals (the first metal terminal 41 to the fourth metal terminal 44) which have been housed in the separator 13. At this time, a front end portion 11h of the outer casing 11 is placed (externally fitted) on the outer side of the outer casing fixing portion 3h located on the rear side of the metal shell 3. Then, the front end portion 11h of the outer casing 11 is joined to the outer casing fixing portion 3h of the metal shell 3 by laser welding (see FIG. 1). Accordingly, the gas sensor 1 according to the present embodiment is completed.

In the gas sensor 1 manufactured as described above, in which the separator 13 is fixed to the outer casing 11 through the metal holder 20, when a force is applied from the outside to the gas sensor 1 or vibration is transmitted from the outside to the gas sensor 1, "vibration of the separator 13 relative to the outer casing 11 in a direction (for example, the radial direction of the outer casing 11) crossing the axial direction DX" is less likely to occur. Therefore, with the manufacturing method according to the present embodiment, it is possible to manufacture the gas sensor 1 in which the separator 13 is less likely to vibrate relative to the outer casing 11 in the axial line crossing direction.

Moreover, in the manufacturing method according to the present embodiment, in the resistance welding step, resistance welding of only the outer casing 11 and each outer casing contact portion 23 of the metal holder 20 (that is, only two members) is performed (see FIG. 10). Therefore, the metal holder can be more easily welded to the outer casing as compared to the case where three members that are a metal holder, an outer casing, and a metal shell are welded. Furthermore, as shown in FIG. 10, the welded portion W is formed by only two members that are the metal holder 20 and the outer casing 11, so that occurrence of cracking in the welded portion due to the difference in thermal expansion between the members forming the welded portion can be reduced as compared to the case where a welded portion is formed by three members that are a metal holder, an outer casing, and a metal shell.

Furthermore, since the outer casing 11 and each outer casing contact portion 23 of the metal holder 20 are joined to each other by means of resistance welding, the welded portion W (the portion solidified after melting) of each outer casing contact portion 23 of the metal holder 20 and the outer casing 11 is formed without being exposed on the outer peripheral surface 11g of the outer casing 11 (see FIG. 10). By forming the welded portion W, which is more likely to corrode as compared to the portion that is not welded (the portion where the base material remains as it is), so as not to be exposed on the outer peripheral surface 11g of the outer casing 11 as described above, a decrease in the corrosion resistance of the outer casing 11 can be suppressed.

While the present invention has been described above based on the embodiment, it should be understood that the present invention is not limited thereto but can be applied with modifications appropriately made thereto without departing from the scope of the gist of the present invention. For example, in the embodiment, the tubular separator 13 made of insulating ceramic is exemplified as a separator. However, as the separator, a separator, which includes: a tubular separator body portion obtained by combining a plurality of insulating members made of insulating ceramic; and a body-portion holding portion (for example, a body-portion holding portion which surrounds the periphery of the separator body portion to hold the tubular shape of the separator body portion) holding a combined state of the plurality of insulating members that constitute the tubular separator body portion, may be used.

In the embodiment, the resistance welding step of performing resistance welding of the outer casing and each outer casing contact portion of the metal holder is exemplified as a welding step of welding the outer casing and each outer casing contact portion of the metal holder. However, the welding of the outer casing and each outer casing contact portion of the metal holder is not limited to resistance welding, and may be performed by another welding method such as laser welding.

## Claims

1. A gas sensor (1) comprising:
a sensor element (5) which extends in an axial direction (DX) and which has an electrode terminal portion (5f, 5g, 5j, 5k) on a rear side of the sensor element (5);
a metal shell (3) which surrounds a periphery of the sensor element (5);
an outer casing (11) which is made of metal, which has a tubular shape extending in the axial direction (DX), and which is mounted on a portion on a rear side of the metal shell (3);
a metal terminal (41, 42, 43, 44) which extends in the axial direction (DX) and which has a front side connection portion (41b, 42b, 43b, 44b) to which the electrode terminal portion (5f, 5g, 5j, 5k) of the sensor element (5) is connected;
a separator (13) which has a tubular shape extending in the axial direction (DX), which is placed inside the outer casing (11) so as to be spaced apart from an inner peripheral surface (11b) of the outer casing (11), and in which the front side connection portion (41b, 42b, 43b, 44b) of the metal terminal (41, 42, 43, 44) and a portion, of the sensor element (5), having the electrode terminal portion (5f, 5g, 5j, 5k) are housed; and
a lead wire (31, 32, 33, 34) which is connected to a rear side connection portion (41c,42c, 43c,44c), of the metal terminal (41, 42, 43, 44), located on a rear side of the metal terminal (41, 42, 43, 44), and which extends to a rear side of the gas sensor (1),
wherein
the gas sensor (1) further comprises a metal holder (20) which has a tubular shape extending in the axial direction (DX) and includes a cylindrical body portion (25) and which is placed inside the outer casing (11) so as to surround a periphery of the separator (13) to hold the separator (13),
wherein the metal holder (20) includes:
a holding portion (21) which is in contact with the separator (13) to hold the separator (13);
a tubular side wall portion (25c) of the body portion (25);
an outer casing contact portion (23) which is in contact with the inner peripheral surface (11b) of the outer casing (11), and
connecting portions (22) connecting the side wall portion (25c) and the outer casing contact portion (23),
**characterized in that**
the connecting portions (22) are formed as leaf springs and are configured to elastically deform in the radial direction of the body portion (25), and **in that** the outer casing contact portion (23) is welded to only the outer casing (11) and fixed to the outer casing (11), whereby a welded portion (W) of the outer casing contact portion (23) of the metal holder (20) and the outer casing (11) is formed.

2. The gas sensor (1) according to claim 1, wherein the welded portion (W) is formed on the inner peripheral surface (11b) side with respect to an outer peripheral surface (1 1g) of the outer casing (11).

3. The gas sensor (1) according to claim 1 or 2, wherein an average thickness of an annular portion (11f), of the outer casing (11), having the welded portion (W) with the outer casing contact portion (23) in a circumferential direction is within a range of not less than 0.3 mm and not greater than 1.0 mm.

4. The gas sensor (1) according to any of claims 1 to 3, wherein an average thickness of the outer casing contact portion (23) of the metal holder (20) is within a range of not less than 0.2 mm and not greater than 1.0 mm.

5. A method for manufacturing the gas sensor (1) according to any of claims 1 to 4, the manufacturing method comprising:
a placing step of placing the metal holder (20) inside the outer casing (11) so as to surround the periphery of the separator (13) such that the holding portion (21) of the metal holder (20) is in contact with the separator (13) and the outer casing contact portion (23) of the metal holder (20) is in contact with the inner peripheral surface (11b) of the outer casing (11); and
a welding step of welding only the outer casing (11) and the outer casing contact portion (23) to each other.

6. The method for manufacturing the gas sensor (1) according to claim 5, wherein the welding step is a resistance welding step of performing resistance welding of only the outer casing (11) and the outer casing contact portion (23) to each other.

## Patentansprüche

1. Gassensor (1) mit:
einem sich in einer Axialrichtung (DX) erstreckenden Sensorelement (5), welches an einer Hinterendseite des Sensorelements (5) einen Elektrodenanschlussbereich (5f, 5g, 5j, 5k) aufweist;
einer einen Umfang des Sensorelements (5) umgreifenden Metallhülse (3); einem Außengehäuse (11) aus Metall, welches eine sich in der Axialrichtung (DX) erstreckende Röhrenform aufweist, und welches an einem Bereich an der Hinterendseite der Metallhülse (3) angebracht ist;
einem sich in der Axialrichtung (DX) erstreckenden Metallanschluss (41, 42, 43, 44), welcher einen Vorderseiten-Verbindungsbereich (41b, 42b, 43b, 44b) aufweist, an welchen der Elektrodenanschlussbereich (5f, 5g, 5j, 5k) des Sensorelements (5) angeschlossen ist;
einem Separator (13), welcher eine sich in der Axialrichtung (DX) erstreckende Röhrenform aufweist, und welcher innerhalb des Außengehäuses (11) derart angeordnet ist, dass er von einer Innenumfangs-Oberfläche (11b) des Außengehäuses (11) beabstandet ist, und in welchem der Vorderseiten-Verbindungsbereich (41b, 42b, 43b, 44b) des Metallanschlusses (41, 42, 43, 44) und ein Bereich des Sensorelements (5) mit dem Elektrodenanschlussbereich (5f, 5g, 5j, 5k) aufgenommen sind; und
einem Zuführungsdraht (31, 32, 33, 34), welcher an einem Hinterseiten-Verbindungsbereich (41c,42c, 43c,44c) des Metallanschlusses (41, 42, 43, 44), an einer Hinterseite des Metallanschlusses (41, 42, 43, 44), angeschlossen ist und welcher sich zu einer Hinterseite des Gassensors (1) erstreckt,
wobei
der Gassensor (1) ferner einen Metallhalter (20) aufweist, welcher eine sich in der Axialrichtung (Dx) erstreckende Röhrenform aufweist und einen zylindrischen Hauptteil (25) aufweist, und welcher innerhalb des Außengehäuses (11) derart angeordnet ist, dass er einen Umfang des Separators (13) derart umgreift, dass er den Separator (13) haltert,
wobei der Metallhalter (20) beinhaltet:
einen Haltebereich (21), welcher derart in Kontakt mit dem Separator (13) steht, dass er den Separator (13) haltert;
einen röhrenförmigen Seitenwandbereich (25c) des Hauptteils (25);
einen Außengehäuse-Kontaktbereich (23), welcher in Kontakt mit der Innenumfangs-Oberfläche (11b) des Außengehäuses (11) steht, und
Verbindungsbereiche (22), die den Seitenwandbereich (25c) und den Außengehäuse-Kontaktbereich (23) verbinden,
**dadurch gekennzeichnet, dass**
die Verbindungsbereiche (22) als Blattfedern ausgebildet und dazu konfiguriert sind, sich in der Radialrichtung des Hauptteils (25) elastisch zu verformen, und
der Außengehäuse-Kontaktbereich (23) nur an das Außengehäuse (11) angeschweißt und am Außengehäuse (11) befestigt ist, wodurch ein Schweißbereich (W) des Außengehäuse-Kontaktbereichs (23) des Metallhalters (20) und des Außengehäuses (11) gebildet ist.

2. Gassensor (1) gemäß Anspruch 1, wobei der Schweißbereich (W) an der Innenumfangs-Überflächen (11b)-Seitenwand in Bezug auf eine Außenumfangs-Oberfläche (11g) des Außengehäuses (11) liegt.

3. Gassensor (1) gemäß Anspruch 1 oder 2, wobei eine durchschnittliche Dicke eines Ringbereichs (11f) des Außengehäuses (11) mit dem Schweißbereich (W) mit dem Außengehäuse-Kontaktbereich (23) in einer Umfangsrichtung innerhalb eines Bereichs von nicht weniger als 0,3 mm und nicht mehr als 1,0 mm liegt.

4. Gassensor (1) gemäß einem der Ansprüche 1 bis 3, wobei eine durchschnittliche Dicke des Außengehäuse-Kontaktbereichs (23) des Metallhalters (20) innerhalb eines Bereichs von nicht weniger als 0,2 mm und nicht mehr als 1,0 mm liegt.

5. Verfahren zum Herstellen des Gassensors (1) gemäß einem der Ansprüche 1 bis 4, wobei das Herstellungsverfahren beinhaltet:
einen Anordnungsschritt des Anordnens des Metallhalters (20) innerhalb des Außengehäuses (11) derart, dass er den Umfang des Separators (13) derart umgreift, dass der Haltebereich (21) des Metallhalters (20) in Kontakt mit dem Separator (13) tritt und der Außengehäuse-Kontaktbereich (23) des Metallhalters (20) in Kontakt mit der Innerumfangs-Oberfläche (11b) des Außengehäuses (11) tritt; und
einen Schweißschritt des Schweißens nur des Außengehäuses (11) und des Außengehäuse-Kontaktbereichs (23) aneinander.

6. Verfahren zum Herstellen des Gassensors (1) gemäß Anspruch 5, wobei der Schweißschritt ein Widerstands-Schweißschritt des Ausführens von Widerstands-Schweißen nur des Außengehäuses (11) und des Außengehäuse-Kontaktbereichs (23) aneinander ist.

## Revendications

1. Capteur de gaz (1) comprenant :
un élément capteur (5) qui s'étend dans une direction axiale (DX) et qui a une partie terminale d'électrode (5f, 5g, 5j, 5k) sur un côté arrière de l'élément capteur (5) ; une coque métallique (3) qui entoure une périphérie de l'élément capteur (5) ;
un carter extérieur (11) qui est réalisé en métal, qui a une forme tubulaire s'étendant dans la direction axiale (DX), et qui est monté sur une partie sur un côté arrière de la coque métallique (3) ;
une borne métallique (41, 42, 43, 44) qui s'étend dans la direction axiale (DX) et qui a une partie de connexion côté avant (41b, 42b, 43b, 44b) à laquelle la partie borne d'électrode (5f, 5g, 5j, 5k) de l'élément capteur (5) est connectée ;
un séparateur (13) qui a une forme tubulaire s'étendant dans la direction axiale (DX), qui est placée à l'intérieur du carter externe (11) de manière à être espacée d'une surface périphérique interne (11b) du carter externe (11), et dans laquelle la partie de connexion côté avant (41b, 42b, 43b, 44b) de la borne métallique (41, 42, 43, 44) et une partie de l'élément de capteur (5), ayant la partie de borne d'électrode (5f, 5g, 5j, 5k) sont logées ; et
un fil conducteur (31, 32, 33, 34) qui est relié à une partie de connexion côté arrière (41c, 42c, 43c, 44c), de la borne métallique (41, 42, 43, 44), située sur un côté arrière de la borne métallique (41, 42, 43, 44), et qui s'étend vers un côté arrière du capteur de gaz (1),
dans lequel
le capteur de gaz (1) comprend en outre un support métallique (20) qui a une forme tubulaire s'étendant dans la direction axiale (DX) et comporte une partie de corps cylindrique (25) et qui est placée à l'intérieur du carter externe (11) de manière à entourer une périphérie du séparateur (13) pour maintenir le séparateur (13),
dans lequel le support métallique (20) comporte :
une partie de maintien (21) qui est en contact avec le séparateur (13) pour maintenir le séparateur (13) ;
une partie de paroi latérale tubulaire (25c) de la partie de corps (25) ;
une partie de contact de carter externe (23) qui est en contact avec la surface périphérique interne (11b) du carter externe (11), et
des parties de raccordement (22) reliant la partie de paroi latérale (25c) et la partie de contact de carter externe (23),
**caractérisé en ce que**
les parties de raccordement (22) sont formées en tant que ressorts à lames et sont conçues pour se déformer élastiquement dans la direction radiale de la partie de corps (25), et **en ce que** la partie de contact de carter externe (23) est soudée uniquement au carter externe (11) et fixée au carter externe (11), moyennant quoi une partie soudée (W) de la partie de contact de carter externe (23) du support métallique (20) et du carter externe (11) est formée.

2. Capteur de gaz (1) selon la revendication 1, dans lequel la partie soudée (W) est formée sur le côté de la surface périphérique interne (11b) par rapport à une surface périphérique externe (11g) du carter externe (11).

3. Capteur de gaz (1) selon la revendication 1 ou 2, dans lequel une épaisseur moyenne d'une partie annulaire (11 f), du carter externe (11), ayant la partie soudée (W) avec la partie de contact de carter externe (23) dans une direction circonférentielle est dans une plage de pas moins de 0,3 mm et non supérieure à 1,0 mm.

4. Capteur de gaz (1) selon l'une quelconque des revendications 1 à 3, dans lequel une épaisseur moyenne de la partie de contact de carter externe (23) du support métallique (20) est dans une plage non inférieure à 0,2 mm et non supérieure à 1,0 mm.

5. Procédé de fabrication du capteur de gaz (1) selon l'une quelconque des revendications 1 à 4, le procédé de fabrication comprenant :
une étape de placement consistant à placer le support métallique (20) à l'intérieur du carter externe (11) de manière à entourer la périphérie du séparateur (13) de telle sorte que la partie de maintien (21) du support métallique (20) est en contact avec le séparateur (13) et la partie de contact de carter externe (23) du support métallique (20) est en contact avec la surface périphérique interne (11b) du carter externe (11) ; et
une étape de soudage consistant à souder uniquement le carter externe (11) et la partie de contact de carter externe (23) l'une à l'autre.

6. Procédé de fabrication du capteur de gaz (1) selon la revendication 5, dans lequel l'étape de soudage est une étape de soudage par résistance consistant à réaliser une soudure par résistance du carter externe (11) et de la partie de contact de carter externe (23) l'une à l'autre.
